# EUROPÄISCHE PATENTSCHRIFT

(11) **EP 1 434 978 B1**
(45) Veröffentlichungstag und Bekanntmachung des Hinweises auf die Patenterteilung: **27.12.2006**
(21) Anmeldenummer: 02774395.4
(22) Anmeldetag: 20.09.2002
(51) Int. Cl.: G01L 19/04, G01L 7/08

(54) **MIKROMECHANISCHES BAUELEMENT (AUF DRUCKSENSORMEMBRAN ) MIT BALGARTIGER STRUKTUR FÜR TEMPERATURBEWEGUNGEN**
MICROMECHANICAL COMPONENT (ON PRESSURE SENSOR MEMBRANE) COMPRISING A BELLOWS-TYPE STRUCTURE FOR TEMPERATURE SHIFTS
COMPOSANT MICROMECANIQUE (SUR MEMBRANE DE CAPTEUR DE PRESSION) A STRUCTURE DE TYPE SOUFFLET POUR VARIATIONS DE TEMPERATURE

(30) Priorität: 04.10.2001 DE 10148859
(43) Veröffentlichungstag der Anmeldung: 07.07.2004
(73) Patentinhaber: ROBERT BOSCH GMBH, 70442 Stuttgart (DE)
(72) Erfinder: BENZEL, Hubert, 72124 Pliezhausen (DE); WEBER, Heribert, 72622 Nuertingen (DE); SCHAEFER, Frank, 72070 Tuebingen (DE)
(86) Internationale Anmeldenummer: PCT/DE2002/003543
(87) Internationale Veröffentlichungsnummer: WO 2003/031926

(56) Entgegenhaltungen:
- EP-A- 0 793 082
- EP-B- 0 427 261
- WO-A-97/39320
- DE-A- 2 544 506
- DE-A- 3 932 618
- JP-A- 61 088 121

## Beschreibung

### Stand der Technik

Die Erfindung betrifft ein mikromechanisches Bauelement zur Montage auf einem Träger sowie einen Drucksensor mit einem solchen Bauelement, wobei der Drucksensor eine Membran umfasst und das Bauelement zumindest teilweise auf der Membran angeordnet ist.

In der internationalen Patentanmeldung WO-9739320 A 1 wird ein Drucksensor mit einer Stahlmembran beschrieben, auf der ein mikromechanisches Bauelement in Form einer Siliziumbrücke montiert ist. Die Auslenkungen der Membran werden mit Hilfe von piezoresistiven Messelementen erfasst, die in die Siliziumbrücke integriert sind.

Das in der WO-9739320 A1 beschriebene Sensorkonzept erweist sich in der Praxis aufgrund der unterschiedlichen thermischen Ausdehnungskoeffizienten des mikromechanischen Bauelements und der Stahlmembran als problematisch. Da der Sensor in der Regel Temperaturschwankungen ausgesetzt ist, treten laterale mechanische Spannungen in der Siliziumbrücke auf, die die Messergebnisse des Sensors wesentlich verfälschen können. Um dies zu verhindern, wird in der WO-9739320 A1 ein aufwendiges Montagekonzept vorgeschlagen, mit dem laterale mechanische Spannungen abgefangen werden sollen.

Aus der US 3,878,711 ist ein Dehnungsmesser bekannt, bei dem eine Stange mittels mittig angebrachter gegenüberliegender Einschnitte zur Aufnahme von Zug- oder Druckspannungen versehen ist. Auf den durch die Einschnitte entstandene Verbindungssteg werden piezoresistive Elemente aufgebracht, die eine Veränderung des Verbindungsstegs unter Einfluss von Zug-oder Druckspannung erfassen und als Messwert im Rahmen einer Wheatstone'schen Brückenschaltung ausgeben.

### Vorteile der Erfindung

Mit der vorliegenden Erfindung wird ein mikromechanisches Bauelement vorgeschlagen, bei dem sich laterale Verspannungen, d.h. Verspannungen des Bauelements parallel zu seinen beiden Hauptoberflächen, in einem definierten Bereich der Bauelementstruktur konzentrieren, was eine Entkopplung von lateralen und vertikalen Spannungen im Bauelement ermöglicht.

Dies wird erfindungsgemäß dadurch erreicht, dass die Bauelementstruktur mindestens eine balgartige Struktur umfasst, in der sich laterale Verspannungen des Bauelements konzentrieren.

Erfindungsgemäß ist erkannt worden, dass sich balgartige Strukturen auch in mikromechanischen Bauelementen einfach erzeugen lassen und - bei entsprechender Orientierung der Bewegungsrichtung - Verspannungen sehr gut aufnehmen können. Balgartige Strukturen können deshalb vorteilhaft zur Kompensation von thermisch bedingten und montagebedingten Verspannungen genutzt werden.

Grundsätzlich gibt es verschiedene Möglichkeiten für die Realisierung eines erfindungsgemäßen mikromechanischen Bauelements und insbesondere seiner balgartigen Struktur.

In einer ersten vorteilhaften Ausgestaltung umfasst die balgartige Struktur mindestens einen verdünnten Abschnitt, der sich im Wesentlichen über die gesamte Dicke der Bauelementstruktur erstreckt, also senkrecht zu den beiden Hauptoberflächen des Bauelements orientiert ist. Dieser verdünnte Abschnitt ist zwischen zwei im Wesentlichen parallel zueinander angeordneten Einschnitten in der Bauelementstruktur ausgebildet, wobei der eine Einschnitt von der einen Hauptoberfläche des Bauelements ausgeht und der andere Einschnitt von der anderen Hauptoberfläche des Bauelements ausgeht. Der verdünnte Abschnitt gibt lateralen Verspannungen des Bauelements leicht nach, während er vertikale Verspannungen, d.h. Verspannungen senkrecht zu den beiden Hauptoberflächen des Bauelements, gut auf die Bauelementstruktur übertragen kann.

Die erfindungsgemäße Bauelementstruktur lässt sich einfach, d.h. mit Hilfe von Standardverfahren der Mikrosystemtechnik, in Silizium realisieren. So kann die balgartige Struktur der ersten voranstehend beschriebenen Variante sowohl durch Sägen als auch durch anisotropes Ätzen, wie z.B. durch Plasmaätzen, Trenchätzen oder KOH-Ätzen, erzeugt werden, wobei mit anisotropen Ätztechniken größere Genauigkeiten bzgl. der Position und Tiefe der Strukturen erzielt werden können.

Mit der vorliegenden Erfindung wird ferner ein Drucksensor mit einem erfindungsgemäßen mikromechanischen Bauelement vorgeschlagen. Der Drucksensor umfasst eine Membran, auf der das Bauelement zumindest teilweise angeordnet ist. Neben der balgartigen Struktur, in der sich laterale Verspannungen des Bauelements konzentrieren, umfasst das Bauelement hier auch Mittel zum Erfassen der Deformationen, die durch die Auslenkungen der Membran bedingt sind, also Mittel zum Erfassen von vertikalen Verspannungen im Bauelement. Da die lateralen und vertikalen Spannungen in dem erfindungsgemäßen Bauelement entkoppelt sind, haben thermisch bedingte Verspannungen des Bauelements gegenüber der Membran keinen Einfluss auf die Ergebnisse der Druckmessungen.

In einer vorteilhaften Variante des erfindungsgemäßen Drucksensors ist in der Bauelementstruktur mindestens ein Deformationsbereich ausgebildet, in dem sich vertikale Verspannungen des Bauelements, also im Wesentlichen die durch die Auslenkungen der Membran bedingten Verspannungen, konzentrieren. Die Ausbildung eines solchen Deformationsbereichs unterstützt die Entkopplung der lateralen und vertikalen Spannungen im Bauelement. Der Deformationsbereich ist im Vergleich zu den anderen Teilen der Bauelementstruktur verdünnt ausgebildet und kann beispielsweise in Form eines im Wesentlichen parallel zu den beiden Hauptoberflächen des Bauelements orientierten Steges in der Bauelementstruktur realisiert sein.

Bei dem im Rahmen des erfindungsgemäßen Drucksensors eingesetzten Bauelement kann der Deformationsbereich aber auch in die balgartige Struktur integriert sein.

Da sich die vertikalen Verspannungen des Bauelements im Deformationsbereich konzentrieren, erweist es sich als vorteilhaft, wenn die Mittel zum Erfassen der Deformationen mindestens einen Piezowiderstand, Metallwiderstand oder Dehnmessstreifen umfassen, der im Deformationsbereich angeordnet ist. Dieser Widerstand kann in vorteilhafter Weise in einer wheatstoneschen Brücke mit Referenzwiderständen verschaltet sein.

Die Bauelementstruktur des Bauelements eines erfindungsgemäßen Drucksensors kann neben einer balgartigen Struktur, die die lateralen Verspannungen des Bauelements aufnimmt, und einem Deformationsbereich, in dem sich die vertikalen Verspannungen konzentrieren, auch Bereiche umfassen, in denen keinerlei Verspannungen auftreten. In diesen versteiften Bereichen der Bauelementstruktur können in vorteilhafter Weise zumindest Teile einer Auswerteschaltung angeordnet sein.

In einer möglichen Variante des erfindungsgemäßen Drucksensors ist das Bauelement in Form einer Brücke realisiert, die über eine erste Verbindungsstelle im Mittelbereich der Membran und über eine zweite Verbindungsstelle im Bereich der Membranumrandung auf der Membran montiert ist. Die balgartige Struktur und der Deformationsbereich sind zwischen den beiden Verbindungsstellen angeordnet. Wenn der Deformationsbereich nicht in die balgartige Struktur integriert ist, so ist die balgartige Struktur vorteilhafter Weise im Bereich der Membran angeordnet, während der Deformationsbereich eher in der Nähe der zweiten Verbindungsstelle angeordnet ist. Zwischen der balgartigen Struktur und dem Deformationsbereich kann in diesem Fall ein versteifter Mittelbereich ausgebildet sein, auf dem beispielsweise ein Teil der Auswerteschaltung angeordnet sein kann. In diesem Zusammenhang sei angemerkt, dass sowohl ein im Deformationsbereich angeordneter Widerstand als auch Teile der Auswerteschaltung in das mikromechanische Bauelement integriert werden können, sofern das Bauelement in einem geeigneten Substrat, wie z.B. einem Siliziumsubstrat, realisiert ist.

### Zeichnungen

Wie bereits voranstehend ausführlich erörtert, gibt es unterschiedliche Möglichkeiten, die Lehre der vorliegenden Erfindung in vorteilhafter Weise auszugestalten und weiterzubilden. Dazu wird einerseits auf die vom Patentanspruch 1 abhängigen Patentansprüche und andererseits auf die nachfolgende Beschreibung mehrerer Ausführungsbeispiele der Erfindung anhand der Zeichnungen verwiesen.

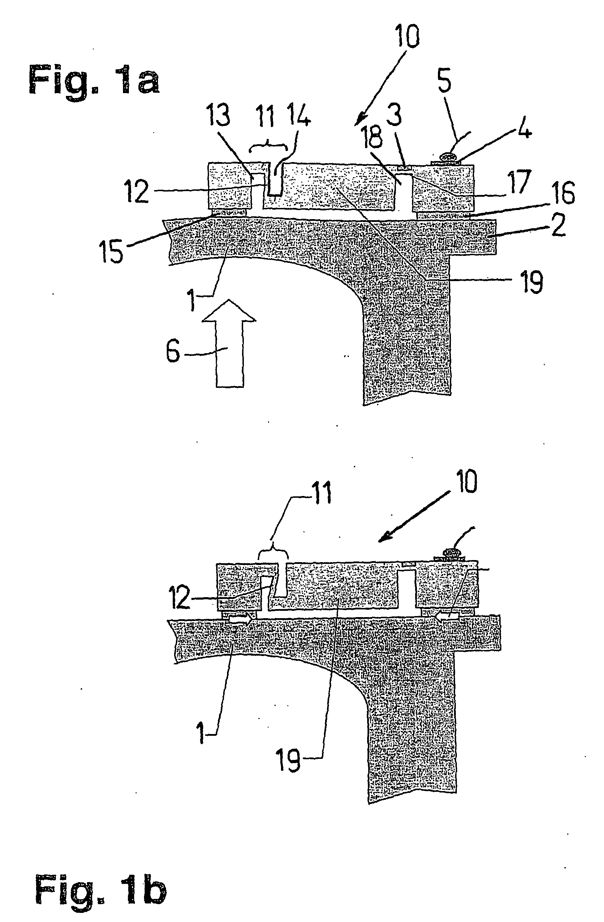

- Fig. 1a: zeigt einen Schnitt durch einen Drucksensor mit einer ersten Variante eines erfindungsgemäßen mikromechanischen Bauelements bei Druckbeaufschlagung,
- Fig. 1 b: zeigt einen Schnitt durch den in Fig. 1a dargestellten Drucksensor bei thermisch induzierten mechanischen Spannungen,
- Fig. 2: zeigt das in den Figuren 1a und 1b dargestellte mikromechanische Bauelement in Aufsicht,
- Fig. 3a: zeigt eine zweite Variante eines erfindungsgemäßen mikromechanischen Bauelements in Aufsicht,
- Fig. 3b: zeigt einen Schnitt durch einen Drucksensor mit dem in Fig. 3a dargestellten mikromechanischen Bauelement,
- Fig. 4a: zeigt eine Alternative zur erfindungsgemäßen Ausgestaltung des mikromechanischen Bauelements in Aufsicht, bei der es sich nicht um eine Ausführungsform der Erfindung, sondern um ein Beispiel handelt, welches das Verständnis der Erfindung erleichtert,
- Fig. 4b: zeigt einen Teil der balgartigen Struktur des in Fig. 4a dargestellten mikromechanischen Bauelements in Aufsicht beim lateralen Zusammendrücken,
- Fig. 4c: zeigt einen Teil der balgartigen Struktur des in Fig. 4a dargestellten mikromechanischen Bauelements im Schnitt bei einer vertikalen Verspannung des Bauelements,
- Fig. 5: zeigt die Aufsicht auf die balgartige Struktur einer vierten Variante eines erfindungsgemäßen Bauelements mit Leiterbahnen,
- Fig. 6a: zeigt die Aufsicht auf die balgartige Struktur einer fünften Variante eines erfindungsgemäßen Bauelements mit Leiterbahnen,
- Fig. 6b: zeigt einen Schnitt durch das in Fig. 6a dargestellten Bauelement und
- Fig. 7: zeigt einen Schnitt durch die Verbindungsstelle eines erfindungsgemäßen Bauelements im Bereich der Membranumrandung.

### Beschreibung der Ausführungsbeispiele

Wie bereits erwähnt, ist in den Figuren 1a und 1b ein Drucksensor, bzw. ein Teil der Membran 1 eines Drucksensors, dargestellt. Die Membran 1 mit der Membranumrandung 2 ist hier aus Stahl gefertigt. Darauf ist ein mikromechanisches Bauelement 10 angeordnet, das bei dem hier dargestellten Ausführungsbeispiel in Silizium realisiert ist. Die Bauelementstruktur dieses Bauelements 10 umfasst erfindungsgemäß eine balgartige Struktur 11, die so ausgelegt ist, dass sich laterale Verspannungen des Bauelements 10 in ihr konzentrieren. Derartige Verspannungen parallel zu den beiden Hauptoberflächen des Bauelements 10 und zur Membran 1 treten beispielsweise bei Temperaturschwankungen auf, wenn die Materialien des mikromechanischen Bauelements 10 und der Membran 1 unterschiedliche thermische Ausdehnungskoeffizienten haben.

Die balgartige Struktur 11 umfasst hier einen senkrecht zu den beiden Hauptoberflächen des Bauelements 10 orientierten verdünnten Abschnitt 12, der sich im Wesentlichen über die gesamte Dicke der Bauelementstruktur erstreckt und zwischen zwei parallel zueinander angeordneten Einschnitten 13 und 14 in der Bauelementstruktur ausgebildet ist. Der Einschnitt 13 geht von der der Membran 1 zugewandten Hauptoberfläche des Bauelements 10 aus, während der Einschnitt 14 von der anderen der Membran 1 abgewandten Hauptoberfläche des Bauelements 10 ausgeht. Laterale Verspannungen des Bauelements 10 und insbesondere thermisch induzierte mechanische Spannungen werden von der balgartigen Struktur 11 aufgenommen und führen zu einer Deformation des verdünnten Abschnitts 12, was in Fig. 1b dargestellt ist. Im Gegensatz dazu werden vertikale Verspannungen des Bauelements 10 und insbesondere mechanische Spannung, die durch eine Druckbelastung der Membran 1 verursacht sind, sehr gut weitergeleitet, was nachfolgend noch näher erläutert wird.

Das mikromechanische Bauelement 10 ist hier in Form einer Brücke realisiert. Es ist lediglich über eine erste Verbindungsstelle 15 im Mittelbereich der Membran 1 und über eine zweite Verbindungsstelle 16 im Bereich der Membranumrandung 2 mit der Membran 1 bzw. der Membranumrandung 2 verbunden.

Im hier dargestellten Ausführungsbeispiel ist in der Bauelementstruktur ein Deformationsbereich 17 ausgebildet, in dem sich vertikale Verspannungen des Bauelements 10 konzentrieren, d.h. Verspannungen, die senkrecht zu den beiden Hauptoberflächen des Bauelements 10 orientiert sind und beispielsweise durch eine Auslenkung der Membran 1 bedingt sind. Der Deformationsbereich 17 ist hier in Form eines Steges realisiert, der durch einen dritten Einschnitt 18 in der Bauelementstruktur erzeugt worden ist. Dieser Einschnitt 18 geht von der der Membran 1 zugewandten Hauptoberfläche des Bauelements 10 aus und ist tiefer ausgeführt als die Einschnitte 13 und 14 in der balgartigen Struktur 11, so dass der Steg 17 im Vergleich zu den übrigen Teilen der Bauelementstruktur verdünnt ausgebildet ist. In dem Steg 17 ist mindestens ein Piezowiderstand 3 integriert, über den die im Steg 17 konzentrierten Verspannungen der Bauelementstruktur erfasst werden.

Sowohl die balgartige Struktur 11 als auch der Deformationsbereich 17 sind zwischen den beiden Verbindungsstellen 15 und 16 angeordnet. Die balgartige Struktur 11 befindet sich im Bereich der Membran 1 neben der ersten Verbindungsstelle 15, während der Deformationsbereich 17 neben der zweiten Verbindungsstelle 16 im Bereich der Membranumrandung 2 angeordnet ist. Zwischen der balgartigen Struktur 11 und dem Deformationsbereich 17 ist ein versteifter Mittelbereich 19 ausgebildet, der die mechanischen Spannungen bei einer Druckbelastung der Membran 1 auf den Piezowiderstand 3 im Deformationsbereich 17 überträgt und thermisch induzierte Spannungen auf den verdünnten Abschnitt 12 der balgartigen Struktur. Da der Mittelbereich 19 praktisch nicht verformt wird, können hier zumindest Teile einer Auswerteschaltung angeordnet und ggf. auch integriert werden. Dadurch kann auch dieser Teil der Chipfläche genutzt werden.

Über der zweiten Verbindungsstelle 16 befindet sich ein Kontaktpad 4 für einen Draht 5 zum Anschluss des Piezowiderstands 3 und einer etwaig vorhandenen Auswerteschaltung. Diese Anordnung erweist sich insbesondere während des Drahtbondvorgangs als vorteilhaft, bei dem der Draht 5 fest auf das Kontaktpad 4 gedrückt wird, da die dabei auftretenden Kräfte im Bereich der zweiten Verbindungsstelle 16 durch die feste Membranumrandung 2 aufgefangen werden.

Eine Druckbeaufschlagung der Membran 1, wie in Fig. 1a durch den Pfeil 6 angedeutet, führt zu einer Auslenkung des Mittelbereichs der Membran 1 nach oben. Dabei wird auch die erste Verbindungsstelle 15 und damit der linke Rand des Bauelements 10 nach oben gedrückt, während der rechte Rand des Bauelements 10 über die zweite Verbindungsstelle 16 fest mit der Membranumrandung 2 verbunden ist. Dies führt zu einer vertikalen Verspannung des Bauelements 10, die in einer Deformation des in vertikaler Richtung dünnsten Bereichs der Bauelementstruktur resultiert. Dabei handelt es sich um den Deformationsbereich 17 mit dem Piezowiderstand 3. In diesem Zusammenhang erweist es sich als vorteilhaft, dass der verdünnte Abschnitt 12 der balgartigen Struktur 11 auf Zug belastet wird, so dass die Spannungen optimal auf den Piezowiderstand 3 übertragen werden. Als Maß für die Druckbelastung der Membran 1 wird die druckabhängige Veränderung des Widerstandswerts des Piezowiderstands 3 erfasst.

Fig. 1 b zeigt das Verhalten des Bauelements 10 bei thermisch induzierten Spannungen. Ist die Ausdehnung des Silizium-Bauelements 10 bei Temperaturänderungen anders als die des Stahluntergrundes, so entstehen laterale mechanische Spannungen, da sich das Silizium-Bauelement 10 aufgrund der Verbindung mit dem Stahluntergrund nicht entsprechend der Temperaturänderung ausdehnen kann. Diese lateralen Spannungen konzentrieren sich in dem in lateraler Richtung dünnsten Bereich der Bauelementstruktur, nämlich im verdünnten Abschnitt 12 der balgartigen Struktur 11. Dort tritt eine Verformung auf, die die lateralen Spannungen abbaut. Dadurch wird verhindert, dass sich das Bauelement 10 in vertikaler Richtung durchbiegt, was in einer Widerstandsänderung des Piezowiderstands 3 resultieren würde, ohne dass die Membran 1 druckbeaufschlagt wäre.

Das in den Figuren 1a und 1b dargestellte Bauelement 10 kann auf unterschiedliche Art und Weise hergestellt werden. Die Einschnitte 13 und 14 der balgartigen Struktur 11 sowie der Einschnitt 18 im Bereich des Deformationsbereichs 17 können beispielsweise durch Sägen vor dem Vereinzeln der Bauelemente erzeugt werden. Eine andere Möglichkeit besteht im Einsatz von anisotropen Ätztechniken, wie Plasmaätzen, Hochratentrenchätzen oder KOH-Ätzen, mit denen eine größere Genauigkeit hinsichtlich der Position und Tiefe der Einschnitte erzielt werden kann. Dabei können auch Sollbruchstellen, beispielsweise in Form einer Perforation, zum Vereinzeln der Bauelementchips erzeugt werden.

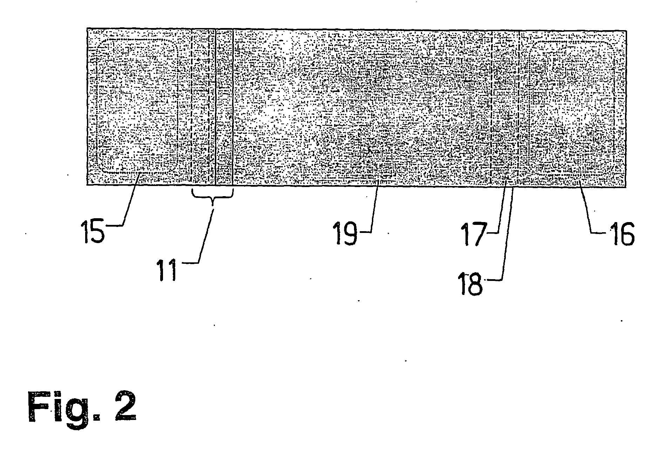

Fig. 2 zeigt den Aufbau des in den Figuren 1a und 1 b dargestellten Bauelements 10 in Aufsicht. Dargestellt ist - von links nach rechts - die erste Verbindungsstelle 15, über die das Bauelement 10 im Mittelbereich der Stahlmembran festgelegt ist, die balgartige Struktur 11, der versteifte Mittelbereich 19 mit Platz für Teile einer Auswerteschaltung, der Deformationsbereich 17, in dem Piezowiderstände angeordnet werden können, und die zweite Verbindungsstelle 16 mit einem Bereich für Kontaktpads, wobei die zweite Verbindungsstelle 16 über der Membranumrandung 2 angeordnet ist.

An dieser Stelle sei angemerkt, dass sowohl die Anzahl als auch die Anordnung der auf bzw. in dem erfindungsgemäßen Bauelement realisierten Wiederstände variieren kann. In einer vorteilhaften Variante sind zwei Piezowiderstände im Deformationsbereich angeordnet. Neben dem Deformationsbereich sind außerdem zwei Widerstände ohne Piezoeffekt als Referenzwiderstände angeordnet. Die Piezowiderstände und die Referenzwiderstände können dann einfach zu einer wheatstoneschen Brücke verschaltet werden. Die vertikalen Verspannungen des Bauelements lassen sich aber auch in vorteilhafter Weise durch zwei im Deformationsbereich senkrecht zueinander angeordnete Piezowiderstände erfassen. Eine weitere Möglichkeit besteht darin, im Deformationsbereich zwei Piezowiderstände anzuordnen, die in Längsrichtung orientiert sind, und zwei Referenzwiderstände ohne Piezoeffekt, die in einem Winkel von 45° dazu orientiert sind.

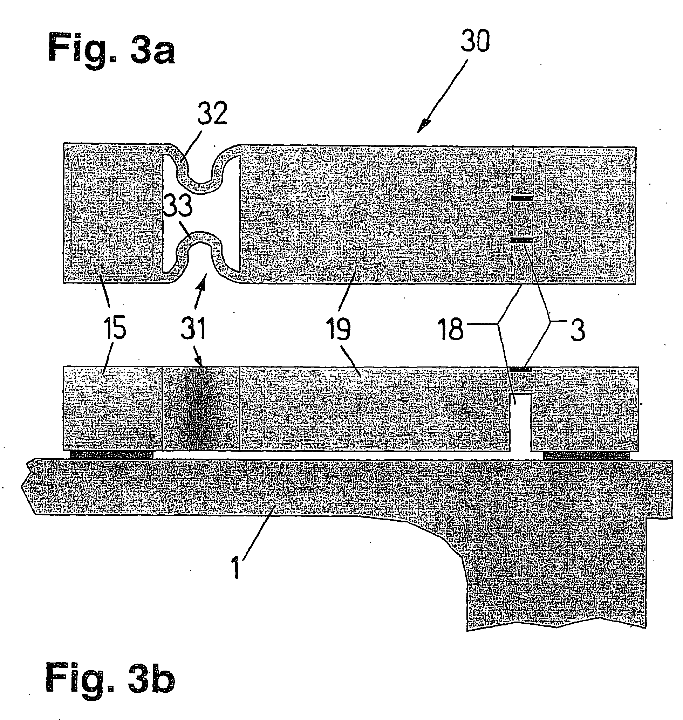

Auch bei der in den Figuren 3a und 3b dargestellten Variante eines erfindungsgemäßen Drucksensors ist das Bauelement 30 brückenförmig ausgebildet und wie in den Figuren 1a und 1b dargestellt auf der Membran 1 bzw. auf der Membranumrandung 2 montiert. Das in den Figuren 3a und 3b dargestellte Bauelement 30 unterscheidet sich von dem in den Figuren 1a, 1b und 2 dargestellten Bauelement 10 im Wesentlichen nur in der Realisierung der balgartigen Struktur 31. Die balgartige Struktur 31 ist hier in Form von zwei wellenförmigen Verbindungsstegen 32 und 33 realisiert, die den ersten Verbindungsbereich 15 mit dem versteiften Mittelbereich 19 verbinden. Die wellenförmigen Verbindungsstege 22 und 23 erstrecken sich in vertikaler Richtung, also in Richtung senkrecht zu den beiden Hauptoberflächen des Bauelements 30, über die gesamte Dicke der Bauelementstruktur. Dadurch können sie laterale Verspannungen aufnehmen, während vertikale Verspannungen der Bauelementstruktur in den Deformationsbereich 17 übertragen werden, wo bei dem hier dargestellten Ausführungsbeispiel zwei Piezowiderstände 3 zur Messwerterfassung angeordnet sind.

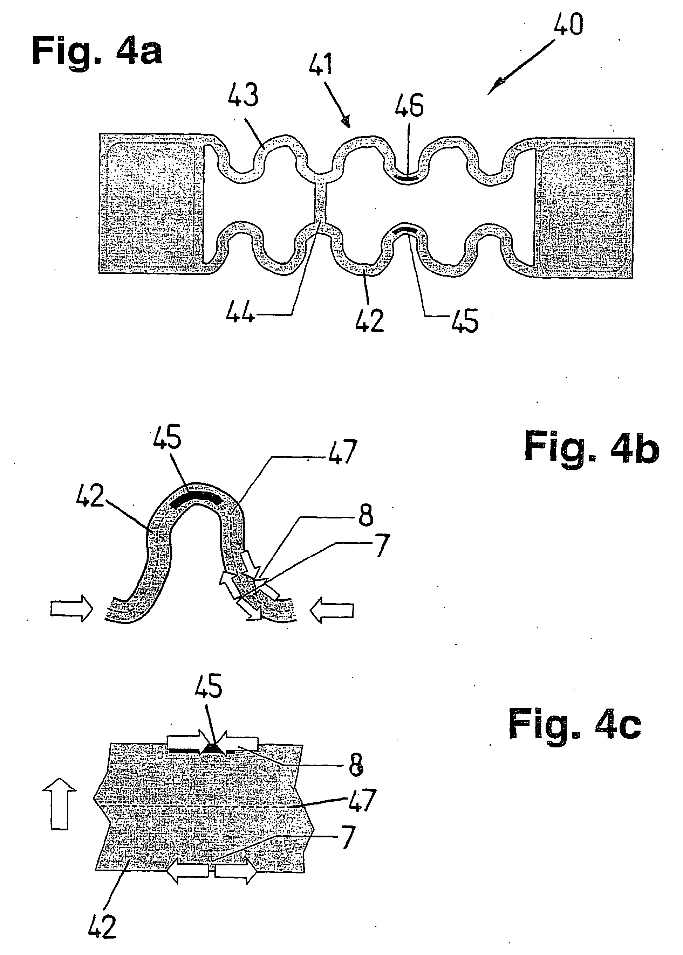

Fig. 4a zeigt eine Alternative 40 zum erfindungsgemäßen Bauelement in Aufsicht, bei dem der Deformationsbereich in die balgartige Struktur 41 integriert ist Dabei handelt es sich nicht um eine Ausführungsform der Erfindung, sondern um ein Beispiel, welches das Verständnis der Erfindung erleichtert. Die balgartige Struktur 41 ist hier in Form von zwei wellenförmigen Verbindungsstegen 42 und 43 mit jeweils vier Schleifen realisiert, die den ersten Verbindungsbereich 15 mit dem zweiten Verbindungsbereich 16 verbinden. Diese Bauelementstruktur umfasst also keinen versteiften Mittelbereich sondern wird lediglich durch einen Zwischenbalken 44 stabilisiert. Auch hier erstrecken sich die wellenförmigen Verbindungsstege 42 und 43 in vertikaler Richtung über die gesamte Dicke der Bauelementstruktur. Auf den dünnen Verbindungsstegen 42 und 43 sind Piezowiderstände 45 und 46 angeordnet, die aufgrund ihrer Anordnung lediglich bei Verspannungen senkrecht zur Bauelementstruktur eine Widerstandsänderung erfahren nicht aber bei lateralen Spannungen in der Bauelementstruktur. Dies wird nachfolgend anhand der Figuren 4b und 4c näher erläutert.

Die Pfeile 7 und 8 in Fig. 4b veranschaulichen am Beispiel des Verbindungsstegs 42 die mechanischen Spannungen, die bei einer lateralen Verspannung des Bauelements 40 in der balgartigen Struktur 41 auftreten. Wird die balgartige Struktur 41 zusammengedrückt, dann erfährt eine Seite des Verbindungsstegs 42 eine Zugbelastung - Pfeile 7 - währen auf der anderen Seite eine Druckbelastung - Pfeile 8 - auftritt. In der Mitte des Verbindungsstegs 42 befindet sich ein Bereich, der im Wesentlichen spannungsneutral bleibt und daher als neutrale Faser 47 bezeichnet wird,. Hier ist der Piezowiderstand 45 angeordnet, so dass er bei einer lateralen Verspannung der Bauelementstruktur keine Widerstandsänderung erfährt. Wird das Bauelement 40 aber senkrecht zur Bewegungsrichtung der balgartigen Struktur 41 verspannt, so tritt auf der Unterseite der balgartigen Struktur 41 eine Zugbelastung und auf der Oberseite eine Druckbelastung auf, was wieder durch die Pfeile 7 und 8 in Fig. 4c veranschaulicht wird. Der Piezowiderstand 45, der auf der Oberseite des Verbindungsstegs 42 angeordnet ist, befindet sich in diesem Fall am Ort maximaler Spannung und erfährt dementsprechend auch eine Widerstandsänderung.

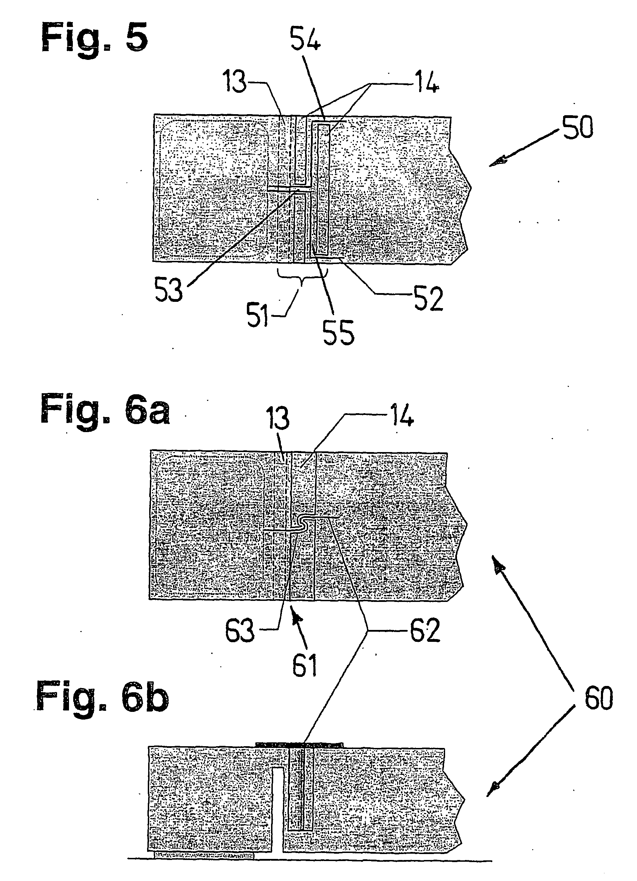

In den Figuren 5 sowie 6a und 6b sind zwei Möglichkeiten für die Realisierung einer balgartigen Struktur 51 und 61 in einem erfindungsgemäßen Bauelement 50 bzw. 60 dargestellt, für den Fall dass Leiterbahnen 52 bzw. 62 über die balgartige Struktur 51 bzw. 61 geführt werden müssen. Bei beiden Varianten ist die balgartige Struktur 51 bzw. 61 durch zwei Einschnitte 13 und 14 in der Bauelementstruktur realisiert, die von den beiden einander gegenüberliegenden Hauptoberflächen der Bauelementstruktur ausgehen.

Die in Fig. 5 dargestellte balgartige Struktur 51 umfasst einen sich über die gesamte Breite des Bauelements 50 erstreckenden Einschnitt 13, der von der Unterseite der Bauelementstruktur ausgeht. Parallel dazu ist ein erster von der Oberseite der Bauelementstruktur ausgehender Einschnitt 14 angeordnet, der in der Mitte unterbrochen ist, so dass ein Steg 53 zur Überführung von Leiterbahnen 52 verbleibt. Dieser Steg 53 erstreckt sich über die gesamte Tiefe des ersten Einschnitts 14 und ist senkrecht zu den Einschnitten 13 und 14 orientiert. Parallel zu dem ersten Einschnitt 14 ist ein zweiter von der Oberseite der Bauelementstruktur ausgehender Einschnitt 14 angeordnet. Dieser zweite Einschnitt 14 erstreckt sich nicht über die gesamte Breite des Bauelements 50, so dass in den beiden Randbereichen Stege 54 verbleiben, über die Leiterbahnen 52 geführt werden können. Bei dem in Fig. 5 dargestellten Ausführungsbeispiel sind zwei Leiterbahnen 52 aus dem linken Bereich der Bauelementoberfläche über den Einschnitt 13 und über den den ersten Einschnitt 14 überbrückenden Steg 53 auf den zwischen dem ersten und dem zweiten Einschnitt 14 verbleibenden Steg 55 geführt. Auf diesem Steg 55 sind die Leiterbahnen dann zwischen den beiden Einschnitten 14 nach außen und über die Stege 54 in den versteiften Mittelbereich 19 des Bauelements 50 geführt.

Die in den Figuren 6a und 6b dargestellte balgartige Struktur 61 umfasst ebenfalls einen sich über die gesamte Breite des Bauelements 60 erstreckenden Einschnitt 13, der von der Unterseite der Bauelementstruktur ausgeht. Parallel dazu ist, im Unterschied zu der in Fig. 5 dargestellten Variante, lediglich ein von der Oberseite der Bauelementstruktur ausgehender Einschnitt 14 angeordnet. Auch hier umfasst die balgartige Struktur 61 einen Steg 63 zur Überführung von Leiterbahnen 62. Dieser Steg 63 ist wellenförmig ausgebildet, im Mittelbereich des Einschnitts 14 angeordnet und erstreckt sich über die gesamte Tiefe des Einschnitts 14. Bei dem in den Figuren 6a und 6b dargestellten Ausführungsbeispiel ist eine Leiterbahn 62 aus dem linken Bereich der Bauelementoberfläche über den Einschnitt 13 und über den den Einschnitt 14 überbrückenden wellenförmigen Steg 63 in den versteiften Mittelbereich 19 des Bauelements 60 geführt.

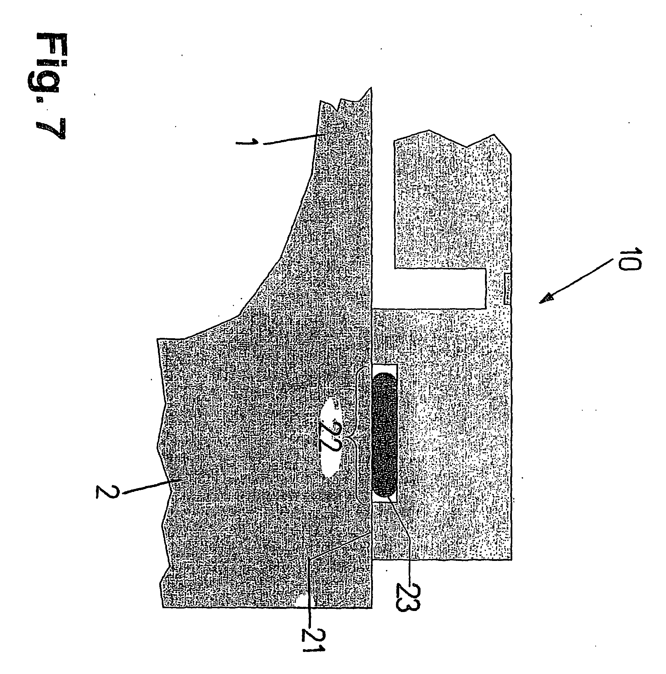

In Fig. 7 ist eine vorteilhafte Möglichkeit für die Realisierung des zweiten Verbindungsbereichs 16 eines erfindungsgemäßen Bauelements 10 auf der Membranumrandung 2 eines Drucksensors dargestellt. Auf der Unterseite des Bauelements 10 sind hier im Verbindungsbereich 16 Abstandshalter 21 ausgebildet. Diese Abstandshalter 21 können beispielsweise durch Ätztechniken oder durch einen breiten, flachen Sägeschnitt realisiert werden. Das Verbindungsmaterial 23, wie z.B. Lot, ist hier in dem Einschnitt 22 zwischen den Abstandshaltern 21 angeordnet.

Auch die Widerstände, Zuleitungen und Anschlusspads können vertieft ausgeführt werden. Dies erweist sich insbesondere bei der Montage des erfindungsgemäßen Bauelements als vorteilhaft, da das Bauelement dann ganzflächig auf den Träger gedrückt werden kann, ohne dass dabei empfindliche Bereiche durch Kratzer oder Druckstellen beschädigt werden.

Um den Abstand zwischen dem Bauelement und der Membran zu erhöhen, kann die Membran mit einer Nut versehen werden, die zentralsymmetrisch zum mittleren Auflagepunkt des Bauelements ausgeführt ist.

Zu den voranstehend beschriebenen Ausführungsbeispielen sei noch angemerkt, dass das erfindungsgemäße Bauelement nicht nur asymmetrisch, wie beschrieben, ausgebildet sein kann, sondern auch symmetrisch, beispielsweise mit einem mittig angeordneten Auflagepunkt und rechts und links von diesem angeordneten balgartigen Strukturen. Möglich ist beispielsweise auch eine runde Form mit einer runden balgartigen Struktur und einem runden Einschnitt zur Konzentration der mechanischen Spannungen am Ort der Piezowiderstände.

Die wesentlichen Vorteile des erfindungsgemäßen Bauelements und des erfindungsgemäßen Drucksensors können abschließend wie folgt zusammengefasst werden:
- Mit Hilfe des erfindungsgemäßen Bauelements können parasitäre, thermisch induzierte mechanische Spannungen in dem erfindungsgemäßen Drucksensor gut abgefangen werden. Gleichzeitig ist eine gute Übertragung der mechanischen Spannungen gewährleistet, die durch eine Druckbelastung der Sensormembran bedingt sind.
- Sowohl die für die Herstellung des erfindungsgemäßen Drucksensors erforderliche Aufbautechnik als auch die erforderliche Verbindungstechnik sind einfach. Bei der Herstellung der Bauelemente ist eine hohe Chipausbeute zu erwarten. Außerdem sind nur geringe Anforderungen an die Oberfläche der Sensormembran zu stellen. Insgesamt kann der erfindungsgemäße Drucksensor daher sehr kostengünstig hergestellt werden.
- Trotz kleiner Baugröße des erfindungsgemäßen Bauelements ist die Integration einer Auswerteschaltung möglich.

## Patentansprüche

1. Drucksensor mit
- einer Membran (1) und
- einem auf der Membran (1) angeordneten mikromechanischen Bauelement (1), wobei das mikromechanische Bauelement (10)
- zwei Hauptoberflächen parallel zur Membran und
- eine balgartige Struktur (11) mit einem verdünnten Abschnitt (12), der den in lateraler Richtung parallel zu den beiden Hauptoberflächen des Bauelements dünnsten Bereich des Bauelements bildet, wobei sich eine Verspannung des Bauelements in dieser lateralen Richtung in der balgartigen Struktur konzentriert, und
- einen Deformationsbereich (17), mit einem verdünnten Abschnitt, der den in vertikaler Richtung senkrecht zu den beiden Hauptoberflächen des Bauelements (10) dünnsten Bereich des Bauelements bildet,
aufweist,
wobei
- sich eine Verspannung des Bauelements (10) in der vertikalen Richtung im Deformationsbereich (17) konzentriert und
- der Deformationsbereich (17) ein Mittel zur Erfassung einer Verspannung in dieser vertikalen Richtung bei Auslenkung der Membran aufweist.

2. Drucksensor nach Anspruch 1, wobei die das Bauelement (10) zwischen der balgartigen Struktur (11) und dem Deformationsbereich (17) einen versteiften Mittelbereich (19) aufweist.

3. Drucksensor nach Anspruch 1, wobei das Mittel zur Erfassung der Verspannung einen Piezowiderstand (3) aufweist, wobei der Widerstandswert des Piezowiderstands in Abhängigkeit von der vertikalen Verspannung des Bauelements erfasst wird.

4. Drucksensor nach Anspruch 1, wobei der Deformationsbereich in Form eines Steges (17) ausgebildet ist, in dem insbesondere wenigstens das Mittel zur Erfassung der Verspannung integriert ist.

5. Drucksensor nach Anspruch 1, wobei der verdünnte Abschnitt (12) der balgartigen Struktur (11) sich im Wesentlichen über die gesamte Dicke des Bauelements erstreckt und zwischen zwei im Wesentlichen parallel zueinander angeordneten Einschnitten (13, 14) in der Bauelementstruktur ausgebildet ist, wobei der eine Einschnitt (13) von der einen Hauptoberfläche des Bauelements (10) ausgeht und der andere Einschnitt (14) von der anderen Hauptoberfläche des Bauelements (10) ausgeht, so dass laterale Verspannungen des Bauelements (10) in einer Deformation des verdünnten Abschnitts (12) resultieren.

6. Drucksensor nach einem der Ansprüche 1 bis 5, wobei das Bauelement aus Silizium besteht.

7. Drucksensor nach Anspruch 1 bis 6, wobei das Bauelement (10) in Form einer Brücke realisiert ist und dass das Bauelement (10) über eine erste Verbindungsstelle (15) im Mittelbereich der Membran (1) und über eine zweite Verbindungsstelle (16) im Bereich der Membranumrandung (2) auf der Membran (1) montiert ist, so dass die balgartige Struktur (11) und der Deformationsbereich (17) zwischen den beiden Verbindungsstellen (15, 16) angeordnet sind.

8. Drucksensor nach Anspruch 7, wobei die balgartige Struktur (11) des Bauelements (10) im Bereich der Membran (1) angeordnet ist, dass der Deformationsbereich (17) in der Nähe der zweiten Verbindungsstelle (16) angeordnet ist.

9. Drucksensor nach einem der Ansprüche 7 oder 8, wobei mindestens ein Kontaktpad (4) auf dem Bauelement (10) über der zweiten Verbindungsstelle (16) angeordnet ist.

10. Drucksensor nach Anspruch 2, wobei im versteiften Mittelbereich (19) des Bauelements (10) zumindest ein Teil der Auswerteschaltung angeordnet ist.

11. Drucksensor nach Anspruch 3, wobei der im Deformationsbereich angeordnete Widerstand in einer wheatstoneschen Brücke mit mindestens einem Referenzwiderstand verschaltet ist.

## Claims

1. Pressure sensor with
- a membrane (1) and
- a micromechanical component (10) arranged on the membrane (1),
the micromechanical component (10) having
- two main surfaces parallel to the membrane and
- a bellows-like structure (11) with a thinned portion (12), which forms the thinnest region of the component in the lateral direction, parallel to the two main surfaces of the component, a distortion of the component in this lateral direction being concentrated in the bellows-like structure, and
- a deformation region (17), with a thinned portion, which forms the thinnest region of the component in the vertical direction perpendicular to the two main surfaces of the component (10),
- a distortion of the component (10) in the vertical direction being concentrated in the deformation region (17) and
- the deformation region (17) having a means for sensing a distortion in this vertical direction when there is deflection of the membrane.

2. Pressure sensor according to Claim 1, the component (10) having a stiffened central region (19) between the bellows-like structure (11) and the deformation region (17).

3. Pressure sensor according to Claim 1, the means for sensing the distortion having a piezo resistor (3), the resistance value of the piezo resistor being sensed in dependence on the vertical distortion of the component.

4. Pressure sensor according to Claim 1, the deformation region being formed as a web (17), in which in particular at least the means for sensing the distortion is integrated.

5. Pressure sensor according to Claim 1, the thinned portion (12) of the bellows-like structure (11) extending essentially over the entire thickness of the component and being formed between two notches (13, 14) in the component structure, arranged essentially parallel to each other, the one notch (13) extending from the one main surface of the component (10) and the other notch (14) extending from the other main surface of the component (10), so that lateral distortions of the component (10) result in a deformation of the thinned portion (12).

6. Pressure sensor according to one of Claims 1 to 5, the component consisting of silicon.

7. Pressure sensor according to Claims 1 to 6, the component (10) being given the form of a bridge and the component (10) being mounted on the membrane (1) by means of a first connecting location (15) in the central region of the membrane (12) and by means of a second connecting location (16) in the region of the periphery (2) of the membrane, so that the bellows-like structure (11) and the deformation region (17) are arranged between the two connecting locations (15, 16).

8. Pressure sensor according to Claim 7, the bellows-like structure (11) of the component (10) being arranged in the region of the membrane (1) in such a way that the deformation region (17) is arranged in the vicinity of the second connecting location (16).

9. Pressure sensor according to either of Claims 7 and 8, at least one contact pad (4) being arranged on the component (10) over the second connecting location (16).

10. Pressure sensor according to Claim 2, at least part of the evaluation circuit being arranged in the stiffened central region (19) of the component (10).

11. Pressure sensor according to Claim 3, the resistor arranged in the deformation region being wired with at least one reference resistor in a Wheatstone bridge.

## Revendications

1. Capteur de pression avec une membrane (1) et, monté sur celle-ci un composant micromécanique (10) qui comprend :
- deux surfaces principales parallèles à la membrane,
- une structure à soufflet (11) avec une partie amincie (12) qui constitue la zone la plus mince du composant dans la direction latérale parallèle aux deux surfaces principales du composant, une déformation du composant dans cette direction latérale se concentrant dans la structure à soufflet,
- une zone de déformation (17) avec une zone amincie qui constitue la zone la plus mince du composant dans la direction verticale perpendiculaire aux deux surfaces principales du composant (10),
**caractérisé en ce qu'**
- une déformation du composant (10) selon la direction verticale se concentre dans la zone de déformation (17), et
- cette zone de déformation (17) présente un moyen pour détecter une déformation dans cette direction verticale, quand se produit une élongation de la membrane.

2. Capteur de pression selon la revendication 1,
**caractérisé en ce que**
le composant (10) présente une zone médiane (19) rigidifiée, située entre la structure à soufflet (11) et la zone de déformation (17).

3. Capteur de pression selon la revendication 1,
**caractérisé en ce que**
le moyen de détection de la déformation est une résistance piézoélectrique (3), la valeur de cette résistance étant détectée en fonction de la déformation verticale du composant.

4. Capteur de pression selon la revendication 1,
**caractérisé en ce que**
la zone de déformation a la forme d'une barrette (17) à laquelle est intégré au moins l'agent de saisie de la déformation.

5. Capteur de pression selon la revendication 1,
**caractérisé en ce que**
la partie amincie (12) de la structure à soufflet (11) s'étend essentiellement sur toute l'épaisseur du composant et se trouve entre deux encoches (13, 14) essentiellement parallèles entre elles et réalisées dans la structure du composant, une encoche (13) partant d'une surface principale du composant (10) tandis que l'autre encoche (14) part de l'autre surface principale du composant (10), de sorte que des déformations latérales du constituant (10) ont pour résultante une déformation de la partie amincie (12).

6. Capteur de pression selon une des revendications 1 à 5,
**caractérisé en ce que**
le composant est en silicium.

7. Capteur de pression selon les revendications 1 à 6,
**caractérisé en ce que**
le composant (10) a la forme d'un pont, monté sur la membrane par l'intermédiaire d'un premier point de liaison (15) situé dans la zone médiane de la membrane (1) et par un second point de liaison (16) situé dans la zone marginale (2) de la membrane, de sorte que la structure (11) à soufflet et la zone de déformation (17) se trouvent entre les deux points de liaison (15, 16).

8. Capteur de pression selon la revendication 7,
**caractérisé en ce que**
la structure à soufflet (11) du composant (10) se trouve dans la zone de la membrane (1), et la zone de déformation (17) se trouve à proximité du second point de liaison (16).

9. Capteur de pression selon la revendication 7 ou 8,
**caractérisé en ce qu'**
au moins une piste de contact (4) se trouve sur le composant (10) au-dessus du second point de liaison (16).

10. Capteur de pression selon la revendication 2,
**caractérisé en ce que**
dans la zone médiane (19) rigidifiée du composant (10), se trouve au moins une partie du circuit d'exploitation.

11. Capteur de pression selon la revendication 3,
**caractérisé en ce que**
la résistance montée dans la zone de déformation est imbriquée dans un pont de Wheatston avec au moins une résistance de référence.
